(19) **Europäisches Patentamt / European Patent Office / Office européen des brevets**

(11) **EP 3 956 652 B1**

(12) **FASCICULE DE BREVET EUROPEEN**

(45) Date de publication et mention de la délivrance du brevet:
**24.05.2023 Bulletin 2023/21**

(21) Numéro de dépôt: **20716508.5**

(22) Date de dépôt: **09.04.2020**

(51) Classification Internationale des Brevets (IPC):
**G01N 21/88** *(2006.01)*    **G01N 21/958** *(2006.01)*

(52) Classification Coopérative des Brevets (CPC):
**G01N 21/958; B07C 5/3422; G01N 21/8851;**
G01N 2021/8845

(86) Numéro de dépôt international:
**PCT/EP2020/060229**

(87) Numéro de publication internationale:
**WO 2020/212263 (22.10.2020 Gazette 2020/43)**

(54) **SYSTÈME ET PROCÉDÉ DE DÉTECTION DE VITROCÉRAMIQUE**

SYSTEM UND VERFAHREN ZUM NACHWEIS VON GLASKERAMIK

SYSTEM AND METHOD FOR DETECTING GLASS CERAMIC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2019 FR 1904246**

(43) Date de publication de la demande:
**23.02.2022 Bulletin 2022/08**

(73) Titulaires:
• **SAINT-GOBAIN ISOVER**
  **92400 Courbevoie (FR)**
• **VERALLIA PACKAGING**
  **FR-92400 Courbevoie (FR)**

(72) Inventeurs:
• **CHENNEVIERE, Hugues**
  **92700 COLOMBES (FR)**
• **OUERGHEMMI, Ezzeddine**
  **92160 ANTONY (FR)**

(74) Mandataire: **Ex Materia**
  **2, rue Hélène Boucher**
  **78280 Guyancourt (FR)**

(56) Documents cités:
WO-A1-2011/020628    WO-A1-2018/096943
JP-A- 2001 269 629    US-A1- 2007 029 233
US-A1- 2007 187 305

**Description**

La présente invention concerne un système de détection automatisé de matériaux de type vitrocéramique parmi un échantillon de fragments de verre, ou calcin. L'invention se rapporte au domaine de l'industrie de la fabrication de produits à base de verre.

Les échantillons de fragments de verre, ou calcin, sont utilisés dans la fabrication de divers produits à base de verre. Par exemple, dans le domaine de l'isolation, on utilise couramment des fibres de verre, obtenues en grande partie à base de calcin. Le calcin peut également être utilisé dans la fabrication de bouteilles et autres récipients en verre.

La fabrication de la fibre de verre se déroule selon un procédé consistant tout d'abord à chauffer le calcin dans un four verrier, à une température suffisante pour faire fondre le verre, soit environ 1500°C. Le verre fondu est ensuite conduit dans un dispositif de centrifugation de type assiette de fibrage, conduisant à la création de fibres qui sont encollées sur leur passage vers un convoyeur sur lequel elles sont ensuite séchées, cuites et mises en forme.

Du fait des erreurs de tri des utilisateurs, le calcin peut contenir non seulement du verre, mais également d'autres matériaux, dont les vitrocéramiques. Ces vitrocéramiques, qui présentent des propriétés différentes de celles du verre, peuvent engendrer des problèmes importants dans les procédés de fabrication de produits à base de calcin, en détériorant les machines et/ou en entraînant des défauts dans les produits.

A titre d'exemple, dans la fabrication de fibres de verre telle qu'elle a été présentée ci-dessus, les vitrocéramiques, qui ont une température de fusion d'environ 1700°C, ne sont pas fondues dans le four verrier dans lequel le verre est fondu à 1500°C. Lorsque, pour obtenir des fibres de verre, le matériau en fusion sortant du four est introduit dans un dispositif de centrifugation interne du type assiette de fibrage, les morceaux de vitrocéramiques contenus dans le verre fondu bouchent les trous de l'assiette de fibrage, dont le diamètre peut notamment être inférieur à 1 mm. C'est alors toute la chaîne de fabrication qui doit être stoppée.

Dans la fabrication de bouteilles et récipients à base de calcin, les morceaux de vitrocéramiques présents dans le calcin peuvent entraîner des fragilités locales sur les produits obtenus et/ou des problèmes esthétiques.

Il résulte de ce qui précède un besoin d'analyse du calcin pour pouvoir identifier précisément la vitrocéramique parmi l'ensemble des morceaux, préalablement à une opération éventuelle de retrait de cette vitrocéramique du calcin.

On connait différentes méthodes pour réaliser un tri du calcin, qui présentent chacune un ou plusieurs inconvénients.

Un art antérieur consiste à procéder à l'analyse du calcin par spectrométrie. Cependant, le matériel nécessaire pour faire des analyses par spectrométrie est coûteux et encombrant. Par ailleurs ce type d'analyse ne permet pas de détecter la vitrocéramique transparente.

Un autre art antérieur consiste à procéder à l'irradiation d'un calcin avec une source lumineuse ultraviolette et une source lumineuse dans le visible, puis à l'analyse des correspondances entre les deux images obtenues par méthode d'ombrage. En d'autres termes, une caméra analyse si l'image du calcin éclairé par la lumière visible est sombre ou claire, c'est-à-dire si le calcin a laissé passer la lumière visible, et une autre caméra analyse si l'image du calcin éclairé par la lumière ultraviolette est sombre ou claire, c'est-à-dire si le calcin a coupé ou non ces rayons ultraviolets. En fonction du résultat de chacun de ces tests, le dispositif permet de classer le type de calcin analysé. Il convient de noter que cette méthode n'est pas spécifiquement adaptée pour la vitrocéramique, en ce sens qu'elle peut assimiler comme vitrocéramique des fragments de verre coloré et/ou sales. De plus, cette méthode nécessite plusieurs appareils d'acquisition d'image ce qui peut se révéler coûteux et/ou encombrant.

Il existe également des procédés de détection par rayons X, mais ces procédés nécessitent de prendre des mesures de sécurité très importantes du fait des risques permanents d'irradiation.

Le document WO2018/096943 montre un système et une méthode de détection automatisé de matériaux de type vitrocéramique parmi un calcin.

La présente invention permet de pallier ces problèmes dus à la présence de vitrocéramiques dans les calcins, de manière spécifique, en limitant les coûts de production, et sans mettre en danger la santé d'autrui.

Elle consiste en un système de détection automatisé de matériaux de type vitrocéramique parmi un calcin, comprenant au moins une source de lumière blanche, au moins une source lumineuse de type ultraviolet monochromatique, chacune étant orientée pour émettre dans une même zone d'émission, le système comptant en outre un dispositif d'acquisition d'image configuré pour acquérir une image de ladite zone d'émission et un dispositif de traitement d'image configuré pour traiter chacune des images acquises par le dispositif d'acquisition d'image, le dispositif de traitement d'image comprenant un module de traitement colorimétrique d'image configuré pour assurer la détection de la vitrocéramique parmi d'autres types de verre.

Pour détecter la vitrocéramique, deux sources lumineuses sont utilisées. La source lumineuse de type ultraviolet monochromatique est au moins une diode électroluminescente (LED) émettant des rayons ultraviolets à une longueur d'onde d'environ 365nm. La vitrocéramique a la particularité de couper les rayons ultraviolets, tandis que la grande majorité des autres types de verre laissent passer ces mêmes rayons, qui traversent donc leur structure. Plus particulièrement, pour une fourchette de longueurs d'ondes de 355nm à 365nm, la vitrocéramique a la particularité de couper la majeure partie des rayons ultraviolets. Cette différence de propriétés s'explique par la présence d'oxydes métalliques dans la vitrocéramique, notamment le dioxyde de titane TiO2, qui ont la particularité d'absorber les rayons ultraviolets. La différence de propriétés optiques dans l'ultraviolet entre la vitrocéramique et les autres types de verre est donc un facteur déterminant pour la détection spécifique de la vitrocéramique.

La source de lumière blanche est polychromatique, c'est-à-dire que contrairement à la source lumineuse de type ultraviolet monochromatique, la source de lumière blanche émet un rayonnement lumineux combinant une multitude de longueurs d'onde. La lumière blanche émet dans le domaine du visible, selon une fourchette de longueur d'onde comprise entre environ 400 et 800nm. La lumière blanche traverse tous types de verres transparents, y compris la vitrocéramique.

Les sources lumineuses sont orientées pour émettre un rayonnement lumineux dans une même zone d'émission. C'est la combinaison des rayonnements lumineux qui permet de distinguer optiquement la vitrocéramique des autres types de verre parmi un calcin.

Le dispositif d'acquisition d'image est avantageusement une caméra de type CCD, couramment utilisée dans l'imagerie numérique. Le dispositif d'acquisition d'image capte les rayons lumineux issus des sources lumineuses tel que cela est décrit ci-après.

Le dispositif de traitement d'image est un algorithme traitant les prises effectuées par le dispositif d'acquisition d'image. Le dispositif de traitement d'image comprend un module de traitement colorimétrique d'image. Par traitement colorimétrique, on entend tous types de module de traitement permettant d'obtenir une correspondance des nuances de couleur apparaissant sur une image acquise en données chiffrées ou lettrées.

Selon une caractéristique de l'invention, le module de traitement colorimétrique d'image traite les images obtenues par le dispositif d'acquisition d'image en ne considérant qu'une seule donnée d'un modèle colorimétrique à trois données. Parmi les modèles colorimétriques, la plupart consistent en une conversion d'une nuance de couleur en un trio de données permettant de définir chacune des couleurs d'un spectre de couleur prédéfini. La particularité de l'invention est qu'elle présente la capacité de détecter les nuances de couleur à partir d'une seule donnée du trio de donnée. L'analyse effectuée par l'invention assure donc un meilleur rendement en cas de potentielle détection à la chaîne par exemple.

Selon une caractéristique de l'invention, le module de traitement colorimétrique d'image est un module de traitement colorimétrique d'image selon un modèle HSV et traite les images obtenues par le dispositif d'acquisition d'image uniquement en considérant la donnée H du modèle HSV.

L'espace de couleur HSV, en français TSV, est un acronyme signifiant Teinte Saturation Valeur. Chaque donnée de ces trois termes permet de définir n'importe quelle nuance de couleur dans le domaine du visible.

La Teinte est un terme pouvant être représenté par un cercle et est défini par une plage de données s'étendant de 0 à 360°. Chaque degré représente une teinte, selon le tableau suivant :

| Degré | Teinte |
|-------|--------|
| 0° | Rouge |
| 60° | Jaune |
| 120° | Vert |
| 180° | Cyan |
| 240° | Bleu |
| 300° | Magenta |
| 360° | Rouge |

La saturation est un terme compris entre 0 et 1, reflétant la notion de quantité de couleur. Une saturation se rapprochant de 0 aura tendance à être plus fade tandis qu'une saturation se rapprochant de 1 sera plus saturée.

La valeur est également un terme compris entre 0 et 1, reflétant la notion de brillance ou luminosité. N'importe quelle donnée ayant une valeur égale à 0 est associée à une couleur noire. Plus la valeur se rapproche de 1, plus la couleur associée sera claire.

L'ensemble des différentes données HSV peut être représenté par un cône de révolution, au sein duquel toutes les nuances de couleur du visible peuvent être converties en terme HSV et correspondent toutes à un point de l'aire de ce cône de révolution. La Teinte correspond à la circonférence du cône, la Saturation correspond au rayon du cône et la Valeur correspond à la hauteur du cône.

Le module de traitement colorimétrique d'image selon un modèle HSV traite les images obtenues par le dispositif d'acquisition d'image en considérant uniquement une donnée du modèle HSV, et plus particulièrement uniquement la donnée H de ce modèle HSV. Comme mentionné précédemment, le modèle HSV correspond à un ensemble de trois données. Néanmoins, les inventeurs ont fait la preuve par différents tests que seule la Teinte H est une donnée d'intérêt lors de l'analyse du calcin par le présent système de détection. Cela permet au système de détection d'être paramétré pour uniquement calculer la donnée de la Teinte H du modèle HSV et donc de ne calculer qu'une seule donnée au lieu de trois, augmentant ainsi la vitesse d'exécution et donc l'efficacité du système.

Selon une caractéristique de l'invention, la zone d'émission comprend une surface réfléchissante, sur laquelle est disposé le calcin et qui est éclairée par les deux types de sources lumineuses de manière simultanée. Les rayonnements lumineux simultanément émis sont captés par le dispositif d'acquisition d'image disposé du même côté de la surface réfléchissante que les sources lumineuses.

Les sources lumineuses projettent leur rayonnement simultanément sur le calcin lorsque celui-ci se situe au niveau de la zone d'émission des sources lumineuses. Ce dernier est donc éclairé par des rayons ultraviolets et des rayons de lumière blanche. C'est ce rayonnement simultané qui permet au système de détection de distinguer la vitrocéramique parmi les autres types de verre.

Lorsque les sources lumineuses projettent leur rayonnement simultanément, le calcin est à la fois dans la zone d'émission des sources lumineuses et dans le plan de capture du dispositif d'acquisition d'image. La surface réfléchissante réfléchit les rayons qu'elle reçoit, émis par les sources lumineuses, de manière à diriger ces rayonnements lumineux en direction du dispositif d'acquisition d'image. Cette disposition permet de placer les sources lumineuses et le dispositif d'acquisition d'image du même côté de la surface réfléchissante et donc de limiter l'encombrement mécanique du système.

Selon une caractéristique de l'invention, le rayonnement de la source lumineuse de type ultraviolet monochromatique traverse un filtre passe-bande centré sur une longueur d'onde de 365nm. Ce filtre passe-bande ne laisse ainsi passer que les rayonnement lumineux d'une longueur d'onde d'une valeur égale à 365nm. Bien que la source lumineuse de type ultraviolet monochromatique ne diffuse théoriquement qu'à 365nm, il est possible qu'elle émette des rayons ultraviolets parasites qui peuvent fausser le traitement de l'image obtenue par la suite. Le filtre basse bande permet d'éliminer ces rayons parasites provenant de la source lumineuse de type ultraviolet monochromatique et n'ayant pas une valeur de 365nm, et ce afin d'assurer un rayonnement lumineux purement monochromatique. D'une manière plus générale, le filtre passe-bande centré sur une longueur d'onde de 365nm assure également un rayonnement monochromatique dans le cas où la source UV émet dans une fourchette de longueur d'onde et n'est pas une source lumineuse monochromatique de base.

Selon une caractéristique de l'invention, les ondes lumineuses émises par au moins la source de lumière blanche sont traitées par un ensemble polariseur et analyseur croisés avant d'être captées par le dispositif d'acquisition d'image.

Si la source de lumière blanche présente une luminosité trop élevée, le dispositif d'acquisition d'image va faire des captures avec un « bruit » parasite. Ce « bruit » correspond à des réflexions lumineuses d'une intensité telle que l'image obtenue est difficilement analysable du fait que certaines réflexions trop lumineuses risquent d'occulter une partie des fragments du calcin de par leur brillance.

Pour pallier ce problème de « bruit », un dispositif de polariseur et analyseur est mis en place au sein du système. Le polariseur est placé devant la source de lumière blanche tandis que l'analyseur est placé devant l'objectif du dispositif d'acquisition d'image.

Selon une caractéristique de l'invention, le système de détection comprend un convoyeur destiné à faire défiler le calcin au niveau de la zone d'émission des sources lumineuses.

Bien que les calcins puissent être analysés de manière statique, il est envisageable de mettre en oeuvre un mode de réalisation comprenant un convoyeur au sein du système, avec un tapis réfléchissant ou bien avec des calcins défilant chacun sur leur propre surface réfléchissante, de sorte que les calcins sont analysés à tour de rôle lors de leur passage au niveau de la zone d'émission des sources lumineuses et du plan de capture du dispositif d'acquisition d'image. Pour cela, les sources lumineuses et le dispositif d'acquisition d'image doivent être disposés de sorte à ce que la zone d'émission et le plan de capture coïncident avec le trajet du convoyeur. Ce mode de réalisation permet d'intégrer la détection de vitrocéramique dans le processus de fabrication de produits à base de calcin, et cela permet de faciliter l'élimination de la vitrocéramique si celle-ci est détectée en tant que telle.

Selon une caractéristique de l'invention, le système comprend un module de calcul configuré pour déterminer la position des différents fragments du calcin au cours de son déplacement. En d'autres termes, si le mode de réalisation impliquant le déplacement automatisé du calcin est mis en place, le système de détection comprend un module de calcul apte à donner en temps réel une position des différents fragments du calcin au cours du déplacement en aval de la zone d'émission et du plan de capture. Ce module de calcul prend notamment en compte la vitesse de défilement du calcin, et ce afin que chaque fragment soit suivi et reconnu en tant que tel au fil du déplacement du calcin. Ce module de calcul sert donc à enregistrer la position des fragments du calcin détectés comme étant des fragments de vitrocéramique à chaque instant t au niveau de la zone d'émission et d'estimer leur position en aval à un instant t+Δt en prenant en compte la vitesse de déplacement du calcin sur le convoyeur, et ce notamment afin d'envoyer l'information à un dispositif d'élimination des fragments de vitrocéramique, externe au système, pour que celui-ci expulse le ou les fragment(s) souhaité(s) du calcin en s'activant au bon endroit et au bon moment.

Selon une caractéristique de l'invention, et de manière complémentaire à ce qui a été décrit précédemment, le dispositif de traitement colorimétrique peut comprendre en outre un module de traitement colorimétrique d'image selon un modèle RGB. Le modèle RGB est un modèle de définition des couleurs, différent du modèle HSV. Tout comme le modèle HSV, le modèle RGB se base sur la valeur de trois données pour définir chacune des nuances de couleur dans le domaine du visible. Chaque couleur est définie en fonction de la valeur de chacune des trois couleurs primaires utilisées pour définir cette couleur, à savoir le rouge R, le vert G et le bleu B. Chacune des valeurs RGB est comprise entre 0 et 255.

Ce module de traitement colorimétrique d'image selon un modèle RGB peut être inclus dans le système de détection pour vérifier les résultats du module de traitement colorimétrique d'image selon un modèle HSV et garantir une meilleure précision de la détection du système.

Selon une caractéristique de l'invention, le module de traitement colorimétrique d'image selon un modèle RGB peut convertir en données RGB l'ensemble de l'image obtenue par le dispositif d'acquisition d'image. Toutefois, avantageusement, le système peut être configuré de manière à ce que le module de traitement colorimétrique d'image selon un modèle RGB convertisse en données RGB uniquement les pixels de l'image acquise qui correspondent aux fragments détectés comme étant des fragments de vitrocéramique après analyse de l'image par le module de traitement colorimétrique d'image selon un modèle HSV. On limite ainsi la durée du traitement colorimétrique complémentaire par le modèle RGB.

L'invention concerne également une installation de fabrication de fibres de verre, de verre creux ou de verre plat comportant au moins un four verrier et des postes de formage, dans lequel du calcin est déversé dans le four verrier pour l'obtention de verre fondu destiné à alimenter les postes de formage, ladite installation comportant un système de détection automatisé tel que précédemment décrit, ledit système de détection automatisé étant positionné sur le trajet du calcin en direction du four verrier.

L'invention concerne également un procédé de mise en oeuvre dudit système de détection automatisé de matériaux de type vitrocéramique par colorimétrie parmi un calcin, caractérisé en ce qu'il comprend les étapes suivantes :

- une étape d'éclairage simultané par au moins une source de lumière blanche et au moins une source lumineuse de type ultraviolet monochromatique d'un calcin,
- une étape d'acquisition des rayons lumineux réfléchis par un dispositif d'acquisition d'image,
- une étape de traitement colorimétrique par un module de traitement colorimétrique d'image de l'image obtenue par le dispositif d'acquisition d'image permettant d'identifier la vitrocéramique parmi d'autres types de verres.

Selon une caractéristique de l'invention, le traitement colorimétrique est effectué par détermination d'une donnée unique par pixel ou groupe de pixels de l'image analysée, puis par comparaison avec une plage de données.

La précision du traitement peut varier en fonction du besoin et/ou de l'encombrement du calcin. Le traitement d'image peut donc être effectué pour chaque pixel de l'image captée par le dispositif d'acquisition d'image afin d'assurer une meilleure précision.

Un pixel est l'unité de base permettant de définir la qualité d'une image sous forme numérique. Autrement dit, il correspond à un point précis de l'image. Le nombre de pixels du dispositif d'acquisition d'image dépend de la résolution du dispositif d'acquisition d'image choisi pour être intégré au système de détection.

Le traitement peut aussi se faire par groupe de pixels afin de traiter un ensemble de pixels avec une précision moindre mais une vitesse de traitement plus rapide. L'utilisation de l'un ou l'autre des modes d'analyse dépend de facteurs tels que la taille des fragments du calcin, le nombre de fragments, ou bien le risque d'un empilement de fragments les uns sur les autre dans le calcin déposé sur la surface réfléchissante.

Selon une caractéristique de l'invention, le traitement colorimétrique est un traitement colorimétrique selon un modèle HSV et est seuillé autour d'une donnée HSV de teinte H comprise entre 50° et 70° avec S=1 et V=0,5.

Le traitement colorimétrique selon un modèle HSV permet d'identifier des fragments du calcin comme étant des fragments de vitrocéramique. Après l'actionnement des sources lumineuses pour diriger leur rayonnement sur la surface du calcin, la capture de la lumière réfléchie par le dispositif d'acquisition d'image et le traitement colorimétrique de cette même image par un modèle HSV, l'image traitée est analysée et des fragments du calcin peuvent apparaître d'une certaine couleur ou non. En effet, en fonction des conditions d'éclairage du système de détection, les fragments de vitrocéramique apparaissent d'une certaine couleur sur l'image capturée et traitée selon un modèle HSV, ce qui les différencie du reste du calcin. De manière théorique, la vitrocéramique présente une couleur spécifique à elle-même lors de l'utilisation du système de détection sur un calcin.

Le seuillage du traitement colorimétrique est basé sur la couleur que reflète la vitrocéramique lors de l'exposition aux rayons émis simultanément par les deux types de sources lumineuses. Due à la présence d'oxydes métalliques dans sa composition, la vitrocéramique absorbe une partie des rayons ultraviolets qu'elle reçoit. Ces oxydes métalliques, absorbent les rayons ultraviolets et des cristaux correspondants diffusent de la lumière bleue, d'où le fait que la vitrocéramique est en théorie le seul type de verre apparaissant en jaune lorsqu'un calcin est analysé par le système de détection, d'où le choix de ce seuillage. Après traitement colorimétrique, le module de calcul peut ainsi être configuré pour identifier comme de la vitrocéramique tout pixel ou groupe de pixel dont la teinte H est comprise entre 50° et 70°.

Selon une caractéristique de l'invention, les représentations obtenues par le dispositif d'acquisition d'image des fragments du calcin identifiés comme étant des fragments de vitrocéramique par le traitement colorimétrique selon un modèle HSV sont revérifiées par calcul du ratio de couleur bleue par couleur rouge après un second traitement colorimétrique par le module de traitement colorimétrique d'image selon un modèle RGB de ces mêmes représentations de fragments.

En d'autres termes, après analyse de l'image par le dispositif de traitement d'image selon un modèle HSV seuillé autour d'une donnée H, seule la vitrocéramique est théoriquement révélée d'une couleur proche de la donnée de seuillage. Le traitement d'image selon un modèle HSV peut cependant engendrer la formation de faux positifs lors du traitement de l'image. Les faux positifs peuvent apparaitre lorsque la couleur du verre ressemble beaucoup à la couleur de la donnée de seuillage utilisée lors du traitement par modèle HSV ou bien peuvent être dus à la présence de poussières de certains types de verre sur les fragments. Ces faux positifs n'étant pas des vitrocéramiques, ils peuvent être utilisés pour la fabrication de produits à base de verre et seraient donc éliminés du calcin inutilement. Pour améliorer la précision de la détection et repérer ces faux positifs, les données HSV des pixels ou groupes de pixels révélés comme correspondant à la représentation numérique de fragments de vitrocéramique sont convertis en données RGB. Ce second traitement de l'image est destiné à éliminer les faux positifs. Selon une variante de réalisation, le traitement d'image complémentaire par colorimétrie sur la base d'un modèle RGB peut être effectué indépendamment du traitement d'image par colorimétrie sur la base du modèle HSV. Dans cette variante, le traitement sur la base d'un modèle RGB serait effectué sur l'image acquise par le dispositif d'acquisition d'image, non traitée au préalable.

Une fois l'ensemble des pixels, ou les groupes de pixels identifiés comme potentiellement correspondants à de la vitrocéramique, converti en données RGB, un ratio $\frac{B}{R}$ est calculé pour chacune de ces données converties. Dans ce qui suit, le ratio $\frac{B}{R}$ correspond à un rapport entre les valeurs de composantes de bleu et de rouge retrouvées dans les images prises ou dans les fragments du calcin révélés comme étant des fragments de vitrocéramique. Le rapport entre les composantes bleues et rouges fait donc la distinction entre la vitrocéramique et les faux positifs. Le calcul de ce ratio assure donc d'éliminer tous les faux positifs et de conserver uniquement les fragments détectés correspondant à la vitrocéramique.

Selon une caractéristique de l'invention, les fragments du calcin identifiés comme étant des fragments de vitrocéramique par le traitement colorimétrique selon un modèle HSV sont confirmés comme étant des fragments de vitrocéramique si le calcul du ratio de couleur bleue par couleur rouge est supérieur à 0,5 après traitement colorimétrique selon un modèle RGB.

La vitrocéramique est le seul verre parmi ceux pouvant être détectés comme positifs au traitement d'image HSV qui a un ratio $\frac{B}{R}$ supérieur à 0,5. Les autres verres qui sont couramment considérés comme faux positifs tels que le verre utilisé pour les bouteilles de vin ou de champagne ont un ratio $\frac{B}{R}$ compris entre 0,07 et 0,23. Le verre de type classique a un ratio $\frac{B}{R}$ de 1, mais ce type de verre ne peut pas être détecté comme étant de la vitrocéramique lors du traitement d'image selon un modèle HSV.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

[Fig.1] est une représentation schématique du système de détection selon un mode de réalisation de l'invention,

[Fig.2] est une représentation schématique du comportement du rayonnement des sources lumineuses du système sur un fragment de verre commun et sur un fragment de vitrocéramique,

[Fig.3] est une représentation schématique du procédé de mise en oeuvre du système de détection,

[Fig.4] est un graphique représentant le pourcentage de transmission de la lumière de différents types de verres en fonction de la longueur d'onde de la lumière reçue.

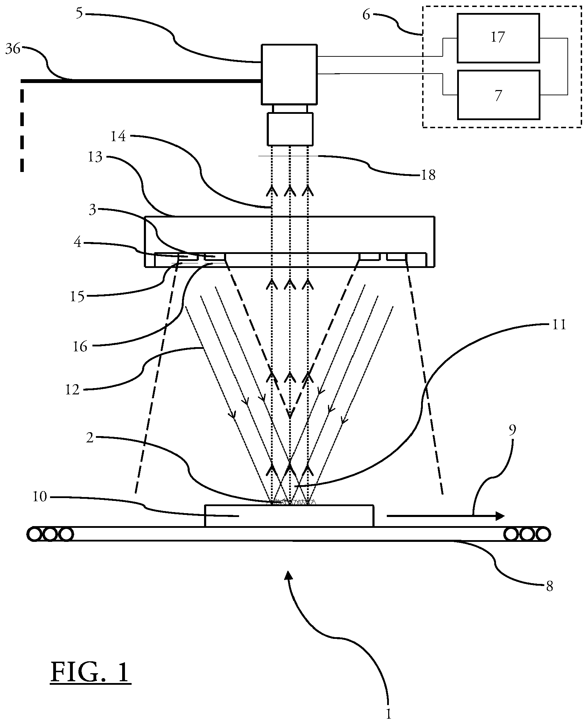

La figure 1 représente un système de détection 1 selon l'invention. Ce système 1 comprend deux types de sources lumineuses, parmi lesquels un premier type correspondant à une source de lumière blanche 3 et un second type correspondant à une source lumineuse de type ultraviolet monochromatique 4. La ou les sources de lumière blanche 3 et la ou les sources lumineuses de type ultraviolet monochromatique 4 sont fixées sur une structure 13 qui soutient les sources lumineuses et comprend des moyens d'alimentation en énergie électrique. Un dispositif d'acquisition d'image 5 surplombe la structure 13. Dans l'exemple illustré, le dispositif d'acquisition d'image 5 est soutenu par un moyen de fixation 36, mais il peut également directement être intégré au sein de la structure 13.

Les rayons lumineux émis par la source de lumière blanche 3 sont directement filtrés par un polariseur 16, afin de limiter l'intensité lumineuse et éviter les reflets parasites pouvant être traités par la suite. Les rayons émis par la source de type ultraviolet monochromatique 4 sont quant à eux filtrés par un filtre passe bande 15 centré à 365nm afin d'obtenir un rayonnement ultraviolet purement monochromatique. Dans l'exemple illustré, la disposition des sources lumineuses et des filtres est identique de l'autre côté de la structure 13 afin d'avoir un éclairage global homogène.

La source de lumière blanche 3 et la source lumineuse de type ultraviolet monochromatique 4 émettent des rayons lumineux 12 en direction d'une zone d'émission 11. La zone d'émission 11 est confondue avec le plan de capture du dispositif d'acquisition d'image 5. Les rayons lumineux 12 émis par la source de lumière blanche 3 et la source lumineuse de type ultraviolet monochromatique 4 sont projetés sur une surface réfléchissante 10 où est disposé un calcin 2.

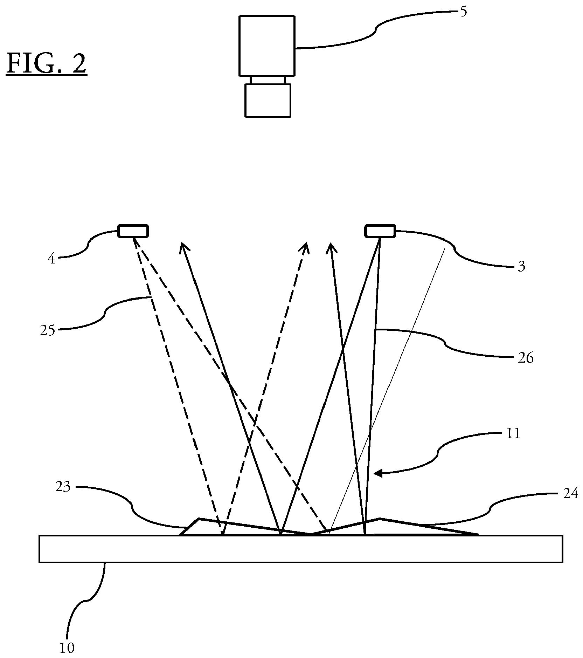

Dans l'exemple illustré, la surface réfléchissante 10 est disposée sur un convoyeur 8 allant dans une direction 9. Les rayons lumineux émis par la source de lumière blanche 3 et par la source lumineuse de type ultraviolet monochromatique 4 ont un comportement variable lorsqu'ils parviennent dans la zone d'émission où est disposé le calcin 2, comme cela est présenté en figure 2.

Des rayons lumineux 14 sont réfléchis par la surface 10 en direction du dispositif d'acquisition d'image 5. Ces rayons lumineux 14 sont filtrés par un analyseur 18, croisé au polariseur 16. L'association du polariseur 16 et de l'analyseur 18 est destinée à limiter les réflexions parasites provenant des rayons lumineux émis par la source de lumière blanche 3, qui rendraient le traitement de l'image difficile à interpréter. Le dispositif d'acquisition d'image 5 capture une image du calcin 2 grâce aux rayons lumineux 14 réfléchis par la surface réfléchissante 10.

Une fois l'image acquise, celle-ci est traitée par un dispositif de traitement d'image 6 relié électroniquement au dispositif d'acquisition d'image 5. Le dispositif de traitement d'image 6 comprend un module de traitement colorimétrique d'image selon un modèle HSV 17, qui est configuré pour analyser l'image pixel par pixel ou par ensembles de pixels et convertir ces pixels en données HSV. Le module de traitement colorimétrique d'image selon un modèle HSV 17 est configuré de sorte que, pour chaque pixel ou ensembles de pixels, une donnée de teinte H est déterminée pour des données fixes de saturation S et de valeur V. Ces données fixes sont ici égales à S=1 et V=0,5.

Chaque donnée de teinte H déterminée est alors comparée à au moins une donnée seuil. Dans l'exemple, la donnée de teinte H est comparée à un seuil minimum de 50° et d'un seuil maximum de 70°. En d'autres termes, si un pixel ou un ensemble de pixels présente des données HSV égales à $50° \leq H \leq 70°$, S=1 et V=0,5, ce pixel ou ensemble de pixels est identifié comme faisant partie d'un fragment de vitrocéramique. Cette information est communiquée, soit à un utilisateur du système pour qu'il puisse manuellement intervenir et sortir le fragment de vitrocéramique du calcin, soit à un dispositif automatisé permettant d'éjecter de manière ciblée les fragments de vitrocéramique identifiés.

De manière alternative, un traitement colorimétrique supplémentaire peut être mis en oeuvre. Les données HSV des fragments révélés comme étant des fragments de vitrocéramique par le module de traitement colorimétrique d'image selon un modèle HSV 17 sont alors converties en données RGB par l'intermédiaire d'un module de traitement colorimétrique d'image selon un modèle RGB 7, compris dans le dispositif de traitement d'image 6, qui calcule le ratio de couleur bleue par couleur rouge - des données RGB récupérées afin de détecter des potentiels faux positifs issus du traitement effectué par le module de traitement colorimétrique d'image selon un modèle HSV 17 et d'améliorer la précision du système de détection 1. Selon le mode de réalisation, le module de traitement colorimétrique selon un modèle RGB 7 peut également convertir l'ensemble de l'image acquise par le dispositif d'acquisition d'image 5. L'image est alors directement transmise au module de traitement colorimétrique selon un modèle RGB 7.

La figure 2 est une représentation schématique du rayonnement lumineux des sources lumineux sur deux types de verre différents. Pour des raisons de simplification schématique, seuls deux rayons de chaque source lumineuse sont représentés, mais en réalité les sources lumineuses émettent dans une multitude de directions, par exemple selon un angle d'émission de 90°. Par ailleurs, les phénomènes de réfraction des rayons lumineux sur les fragments de verre ne sont pas représentés, toujours dans un souci de simplification de la figure.

La figure 2 représente la source de lumière blanche 3 et la source lumineuse de type ultraviolet monochromatique 4 émettant chacune leur rayonnement lumineux respectif. La source de lumière blanche 3 émet des rayons de lumière blanche 26, représentés en traits plein, et la source lumineuse de type ultraviolet monochromatique 4 émet des rayons ultraviolets 25 d'une longueur d'onde de 365nm, représentés en pointillés. Les deux rayonnements lumineux se rejoignent au niveau de la zone d'émission 11, où est ici présent un calcin posé sur la surface réfléchissante 10. Un fragment de verre classique 23 et un fragment de vitrocéramique 24 sont ici présents au sein du calcin.

Le fragment de verre classique 23 laisse passer tous types de rayons lumineux. Ainsi, le rayon de lumière blanche 26 et le rayon ultraviolet 25 traversent la structure du fragment de verre classique 23, sont réfléchis par la surface réfléchissante 10 et retraversent la structure du fragment de verre classique 23 en direction du dispositif d'acquisition d'image 5.

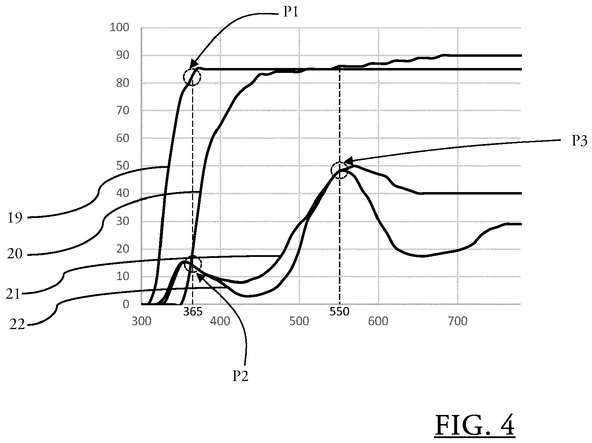

Le fragment de vitrocéramique 24 présente des propriétés optiques différentes du fragment de verre classique 23. La vitrocéramique a la particularité d'absorber une majorité des rayons ultraviolets comme cela sera expliqué plus en détail en référence à la figure 4. Le rayon ultraviolet 25 ne traverse donc pas la structure du fragment de vitrocéramique 24 dans sa totalité et est absorbé en grande majorité. D'une manière générale, un rayon ultraviolet d'une longueur d'onde de 365nm est peu réfléchi en direction du dispositif d'acquisition d'image 5 si sa trajectoire passe par un fragment de vitrocéramique.

Le rayon de lumière blanche 26, tout comme pour le fragment de verre classique 23, traverse le fragment de vitrocéramique 24 et est réfléchi en direction du dispositif d'acquisition d'image 5.

D'une manière théorique, le dispositif d'acquisition d'image 5 reçoit tous les rayons de lumière blanche 26 issus de la source de lumière blanche 3 et les rayons ultraviolets 25 de la source lumineuse de type ultraviolet monochromatique 4 à l'exception des rayons ultraviolets 25 ayant été absorbés en grande partie par le ou les fragments de vitrocéramique 24. Il résulte de ce double éclairage et de la coupure partielle des rayons ultraviolets par la vitrocéramique une analyse colorimétrique possible sur l'image acquise du fait que la vitrocéramique prend une teinte jaune au contraire du reste du calcin.

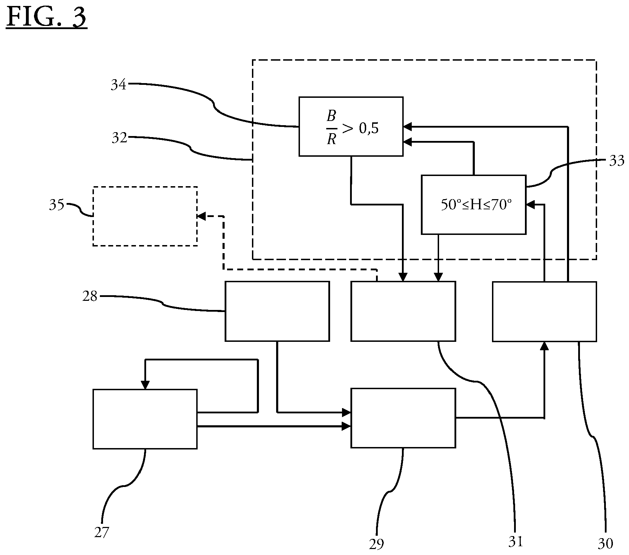

La figure 3 est une représentation schématique du procédé de mise en oeuvre du système de détection.

Une étape du défilement du convoyeur 27 à une vitesse donnée implique un déplacement d'un ou plusieurs calcins sur leur surface réfléchissante ou directement sur le tapis réfléchissant du convoyeur.

Le défilement du convoyeur 27 génère une étape de positionnement 29 du calcin dans la zone d'émission. Parallèlement à cela, une étape d'émission 28 du rayonnement lumineux des sources lumineuses se déclenche afin d'éclairer le calcin présent au niveau de la zone d'émission. L'association de l'étape de positionnement 29 du calcin dans la zone d'émission et de l'étape d'émission 28 du rayonnement lumineux des sources lumineuses conduit à une étape d'acquisition de l'image 30 par le dispositif d'acquisition d'image.

Une fois l'image capturée, cette dernière est soumise à une étape de traitement de l'image 32, elle-même constituée d'au moins une sous-étape de traitement colorimétrique de l'image selon un modèle HSV 33. La sous-étape de traitement colorimétrique de l'image selon un modèle HSV 33 analyse l'image obtenue lors de l'étape d'acquisition de l'image 30, pixel par pixel ou par groupements de pixels, en appliquant à cette image un seuillage de H entre les valeurs 50° et 70°, de sorte que 50°≤H≤70°, pour des données S et V définies. Si aucun pixel ou groupe de pixels ne correspond à ce seuillage, le procédé de mise en oeuvre du système de détection se termine, et un nouveau cycle reprend avec un nouveau calcin défilant sur le convoyeur.

Si un ou des pixels, ou bien un ou des groupes de pixels correspondent à ce seuillage de H, alors les fragments du calcin relatifs à ces pixels ou groupes de pixels sont théoriquement identifiés comme des fragments de vitrocéramique. Conséquemment à cela, soit l'information est transmise à une étape de calcul de suivi du calcin 31 qui sera décrite par la suite, soit une vérification des faux positifs s'effectue, via une sous-étape de traitement colorimétrique de l'image selon un modèle RGB 34. Pour ce faire, plusieurs phases se succèdent : tout d'abord l'image acquise est traitée selon un modèle RGB, soit l'image dans son intégralité, soit uniquement les pixels correspondant au seuillage de la donnée H du modèle HSV. Pour chacun de ces pixels, la valeur de rouge R et la valeur de bleu B sont récupérées, les deux valeurs étant comprises entre 0 et 255. Le module de traitement colorimétrique d'image selon un modèle RGB calcule ensuite un ratio $\frac{B}{R}$ et compare ce ratio à une valeur seuil. Le seuillage de $\frac{B}{R}$ est fixé comme étant supérieur à 0,5. En d'autres termes, si le ratio $\frac{B}{R}$ d'un ou des pixels ou bien d'un ou des groupes de pixels est supérieur à cette valeur seuil de 0,5, alors le fragment correspondant est confirmé comme étant un fragment de vitrocéramique. Si ce même ratio est inférieur à la valeur seuil de 0,5, alors le fragment correspondant est identifié comme étant un faux positif n'étant pas un fragment de vitrocéramique.

Toutes ces informations sont alors transmises à l'étape de calcul du suivi 31. Au cours de l'étape de calcul du suivi 31, les fragments d'intérêt sont ciblés, c'est-à dire les fragments qui ont été identifiés comme étant des fragments de vitrocéramique, suite à la sous-étape de traitement colorimétrique de l'image selon un modèle HSV 33, et qui ont été confirmés comme tels lors de la sous-étape de traitement colorimétrique de l'image selon un modèle RGB 34 si celle-ci est présente dans le système. Ces fragments sont ciblés et suivis en prenant en compte la vitesse de déplacement du calcin en fonction de la vitesse du convoyeur. On comprend que les fragments sont ciblés en ce que, à partir d'une position connue à l'instant t, le système peut avec précision déterminer leur position à l'instant t+Δt.

Une fois que ces fragments sont ciblés lors de l'étape de calcul du suivi 31, il s'ensuit alors une étape d'élimination des fragments de vitrocéramique 35, en pointillés sur la figure car externe au système de détection. L'étape d'élimination des fragments de vitrocéramique 35 peut s'effectuer par le biais d'un dispositif de soufflerie, présent le long du convoyeur, en aval du système de détection. Grâce à l'étape de calcul du suivi 31, le dispositif de soufflerie, ayant reçu les informations de localisation du module de calcul, s'active à l'endroit où sont situés les fragments de vitrocéramique et au bon moment. Les fragments de vitrocéramique sont alors expulsés du calcin.

La figure 4 est un graphique représentant le pourcentage de transmission de la lumière à travers différents types de verre en fonction de la longueur d'onde de la lumière émise. Quatre courbes correspondants à quatre différents types de verre apparaissent sur ce graphique : une courbe 19 correspondant au verre classique, soit le verre le plus courant, une courbe 20 correspondant à la vitrocéramique, une courbe 21 correspondant au verre bouteille, couramment utilisé pour confectionner des bouteilles de vin, et une courbe 22 correspondant au verre champagne, couramment utilisé pour confectionner des bouteilles de champagne. Concernant l'axe des abscisses du graphique, la zone inférieure à 400nm correspond au domaine des ultraviolets tandis que la zone supérieure à 400nm correspond au domaine du visible.

La courbe du verre classique 19 et la courbe de la vitrocéramique 20 ont une allure similaire, à savoir une courbe correspondant à une forte augmentation du pourcentage de transmission de la lumière jusqu'à atteindre un palier compris entre 85 et 90% de transmission. La différence majeure entre ces deux courbes réside dans le fait que la courbe du verre classique 19 augmente brutalement à une longueur d'onde plus faible que l'augmentation brutale de la courbe de la vitrocéramique 20. Le verre classique a donc un pourcentage de transmission bien plus élevé que celui de la vitrocéramique dans les ultraviolets. Cette différence justifie l'emploi d'une source lumineuse de type ultraviolet monochromatique d'une longueur d'onde de 365nm, car à cette valeur, le pourcentage de transmission de lumière du verre classique est de plus de 80% (point P1 sur la figure 4) tandis que celui de la vitrocéramique est inférieur à 20% (point P2 sur la figure 4). Le dispositif d'acquisition d'image capte donc les rayons ultraviolets de 365nm et les rayons de lumière blanche de l'ensemble du spectre du visible, par exemple 550nm, s'ils ont traversé un fragment de verre classique, mais ne capte pas la totalité des rayons ultraviolets qui ont rencontré un fragment de vitrocéramique étant donné que ceux-ci ont été en grande partie absorbés par la vitrocéramique. Les conditions d'éclairage du système de détection sont telles que la vitrocéramique, au travers de ses propriétés optiques, apparait avec une teinte nuancée autour du jaune, correspondant à la donnée de seuillage HSV choisie, soit 50°≤H≤70°. La nuance de couleur correspondant à la vitrocéramique est due à plusieurs facteurs, notamment les sources lumineuses ou encore le type de dispositif d'acquisition d'image.

Cette couleur jaune s'explique par la présence d'oxydes métalliques dans la composition de la vitrocéramique, comme cela a été expliqué précédemment.

Les deux autres courbes, à savoir la courbe du verre bouteille 21 et la courbe du verre champagne 22 ont également une allure similaire l'une par rapport à l'autre. Ce sont deux types de verres dont la courbe respective est variable, et qui transmettent difficilement les ondes lumineuses, ne dépassant jamais 50% de transmission de la lumière (point P3 sur la figure 4). Au niveau des ultraviolets, le verre bouteille et le verre champagne ont un pourcentage de transmission de la lumière similaire au pourcentage de transmission de la lumière de la vitrocéramique, notamment à 365nm ce qui correspond à la longueur d'onde d'émission de la source lumineuse de type ultraviolet monochromatique. Le verre bouteille et le verre champagne absorbent donc les rayons ultraviolets émis par la source lumineuse de type ultraviolet monochromatique de la même manière que la vitrocéramique. Par ailleurs, la valeur de la longueur d'onde où les deux types de verre transmettent le mieux la lumière est de l'ordre de 550-570nm environ. Dans le spectre du visible, cette fourchette de longueur d'onde correspond à une couleur verte jaunâtre.

Pour résumer, le verre bouteille et le verre champagne ont sensiblement les mêmes propriétés d'absorption des rayons ultraviolets que la vitrocéramique, et leur meilleur pourcentage de transmission de la lumière correspond à la couleur verte jaunâtre, soit une teinte assez similaire à la teinte de seuillage de la vitrocéramique lorsque l'image obtenue par le dispositif d'acquisition d'image est traitée par le module de traitement colorimétrique d'image selon un modèle HSV. Le verre bouteille et le verre champagne sont donc deux types de verre susceptibles d'être des faux positifs, c'est-à-dire qu'ils sont susceptibles d'être détectés comme étant des fragments de vitrocéramiques alors qu'ils n'en sont pas lors de l'analyse par le module de traitement colorimétrique d'image selon un modèle HSV. La présence du module de traitement colorimétrique d'image selon un modèle RGB prend alors tout son sens étant donné que le ratio $\frac{B}{R}$ du verre bouteille et du verre champagne est inférieur à 0,5, ce qui permet d'infirmer le fait qu'il s'agisse de fragments de vitrocéramique.

On comprend à la lecture de ce qui précède que la présente invention propose un système de détection automatisée de vitrocéramique dans un calcin. L'invention ne saurait se limiter aux moyens et configurations décrits et illustrés ici, et elle s'étend également à tout moyen ou configuration équivalents et à toute combinaison technique opérant de tels moyens. En particulier, s'il est décrit un exemple de réalisation dans lequel les conditions d'éclairage impliquent une coloration jaune de la vitrocéramique, on pourra prévoir que les valeurs seuils implémentées dans le module de calcul associé au module de traitement par colorimétrie diffèrent de celles décrites pour détecter une autre couleur que le jaune, dès lors que conformément à l'invention, seule une donnée du modèle HSV est comparée à une plage de valeurs pour permettre tel que décrit une détection rapide apte à être mise en oeuvre sur une ligne de fabrication.

Selon l'invention, la donnée du modèle HSV qui est prise en compte est comparée à des valeurs de seuil qui dépendent des conditions d'éclairage, et qui peuvent également dépendre de la qualité du moyen d'acquisition d'image. Ainsi, selon la qualité de la caméra utilisée, la couleur identifiée pour la vitrocéramique peut tendre vers le vert par exemple alors qu'elle est jaune à l'œil nu, conformément à ce qui a été décrit précédemment. Un calibrage de la caméra pourra être nécessaire pour ajuster les valeurs de seuil du modèle HSV. Il convient de comprendre que selon l'invention, sous un éclairage adéquat de type source de lumière blanche à large spectre et source de rayonnements ultraviolets de longueur d'ondes ciblée à 365 nm, la vitrocéramique réagit en prenant une teinte qui lui est spéciale, notamment le jaune, et qui permet par l'intermédiaire des moyens d'acquisition d'image et du module de traitement colorimétrique de détecter cette vitrocéramique parmi d'autres échantillons de verre.

## Revendications

1. Système de détection automatisé (1) de matériaux de type vitrocéramique parmi un calcin (2), **caractérisé en ce qu'**il comprend au moins une source de lumière blanche (3) et au moins une source lumineuse de type ultraviolet monochromatique (4), chacune étant orientée pour émettre dans une même zone d'émission (11), un dispositif d'acquisition d'image (5) configuré pour acquérir une image de ladite zone d'émission (11) et un dispositif de traitement d'image (6) configuré pour traiter chacune des images acquises par le dispositif d'acquisition d'image (5), le dispositif de traitement d'image (6) comprenant un module de traitement colorimétrique d'image (7-17) configuré pour assurer la détection de la vitrocéramique parmi d'autres types de verre.

2. Système de détection (1) selon la revendication 1, dans lequel le module de traitement colorimétrique d'image (7-17) traite les images obtenues par le dispositif d'acquisition d'image (5) en ne considérant qu'une seule donnée d'un modèle de traitement colorimétrique à trois données.

3. Système de détection (1) selon la revendication 2, dans lequel le module de traitement colorimétrique d'image (7-17) comprend un module de traitement colorimétrique d'image selon un modèle HSV (17) et traite les images obtenues par le dispositif d'acquisition d'image (5) uniquement en considérant la donnée H du modèle HSV.

4. Système de détection (1) selon l'une quelconque des revendications précédentes, dans lequel la zone d'émission (11) comprend un calcin (2) disposé sur une surface réfléchissante (10), éclairée par les deux types de sources lumineuses de manière simultanée, dont les rayonnements lumineux sont captés par le dispositif d'acquisition d'image (5) disposé du même côté de la surface réfléchissante (10) que les sources lumineuses.

5. Système de détection (1) selon l'une quelconque des revendications précédentes, dans lequel le rayonnement de la source lumineuse de type ultraviolet monochromatique (4) traverse un filtre passe bande (15) centrée à 365nm.

6. Système de détection (1) selon l'une quelconque des revendications précédentes, dans lequel les ondes lumineuses émises par au moins la source de lumière blanche (3) sont traitées par un dispositif de polariseur (16) et analyseur (18) croisé avant d'être captées par le dispositif d'acquisition d'image (5).

7. Système de détection (1) selon l'une quelconque des revendications précédentes, dans lequel est compris un convoyeur (8) destiné à faire défiler le calcin (2) au niveau de la zone d'émission (11) des sources lumineuses.

8. Système de détection (1) selon l'une quelconque des revendications précédentes, dans lequel est compris un module de calcul configuré pour déterminer la position des différents fragments du calcin (2) au cours de son déplacement.

9. Système de détection (1) selon l'une des revendications précédentes, dans lequel le dispositif de traitement colorimétrique (6) comprend en outre un module de traitement colorimétrique d'image selon un modèle RGB (7).

10. Installation de fabrication de fibres de verre, de verre creux ou de verre plat comportant au moins un four verrier et des postes de formage, dans lequel du calcin est déversé dans le four verrier pour l'obtention de verre fondu destiné à alimenter les postes de formage, ladite installation comportant un système de détection automatisé selon l'une des revendications précédentes, ledit système de détection automatisé étant positionné sur le trajet du calcin en direction du four verrier.

11. Procédé de mise en oeuvre d'un système de détection automatisé (1) de matériaux de type vitrocéramique par colorimétrie parmi un calcin (2) selon l'une quelconque des revendications 1 à 9, **caractérisé en ce qu'**il comprend les étapes suivantes :

   - une étape d'éclairage simultané par au moins une source de lumière blanche (3) et au moins une source lumineuse de type ultraviolet monochromatique (4) d'un calcin (2),
   - une étape d'acquisition des rayons lumineux réfléchis (14) par un dispositif d'acquisition d'image (5),
   - une étape de traitement colorimétrique par un module de traitement colorimétrique d'image (7-17) de l'image obtenue par le dispositif d'acquisition d'image (5) permettant d'identifier la vitrocéramique parmi d'autres types de verres.

12. Procédé de détection selon la revendication 11, dans lequel le traitement colorimétrique est effectué par détermination d'une donnée unique par pixel ou groupe de pixel de l'image analysée, puis par comparaison avec une plage de données.

**13.** Procédé de détection selon la revendication 11 ou 12, dans lequel le traitement colorimétrique est un traitement colorimétrique selon un modèle HSV et est seuillé autour d'une donnée HSV de H comprise entre 50° et 70° avec S=1 et V=0,5.

**14.** Procédé de détection selon l'une quelconque des revendications 11 à 13, dans lequel les représentations obtenues par le dispositif d'acquisition d'image (5) des fragments du calcin (2) identifiés comme étant des fragments de vitrocéramique par le traitement colorimétrique selon un modèle HSV sont revérifiées par calcul du ratio de couleur bleue par couleur rouge après un second traitement colorimétrique par le module de traitement colorimétrique d'image selon un modèle RGB (7) de ces mêmes représentations de fragments.

**15.** Procédé de détection selon la revendication 14, dans lequel les fragments du calcin (2) identifiés comme étant des fragments de vitrocéramique par le traitement colorimétrique selon un modèle HSV sont confirmés comme étant des fragments de vitrocéramique si le calcul du ratio de couleur bleue par couleur rouge est supérieur à 0,5 après traitement colorimétrique selon un modèle RGB.

**Patentansprüche**

**1.** System (1) zum automatisierten Nachweis von Materialien vom Glaskeramiktyp in einem Bruchglas (2), **dadurch gekennzeichnet, dass** es mindestens eine Quelle (3) für weißes Licht und mindestens eine Lichtquelle (4) vom Typ des monochromatischen Ultraviolets, die jeweils so ausgerichtet sind, dass sie in einem selben Emissionsbereich (11) ausstrahlen, eine Bilderfassungsvorrichtung (5), die so ausgebildet ist, dass sie ein Bild des Emissionsbereichs (11) erfasst, und eine Bildverarbeitungsvorrichtung (6) umfasst, die so ausgebildet sind, dass sie jedes der von der Bilderfassungsvorrichtung (5) erfassten Bilder verarbeitet, wobei die Bildverarbeitungsvorrichtung (6) ein kolorimetrisches Bildverarbeitungsmodul (7-17) umfasst, das so ausgebildet ist, dass es den Nachweis der Glaskeramik unter anderen Glassorten gewährleistet.

**2.** Nachweissystem (1) nach Anspruch 1, wobei das kolorimetrische Bildverarbeitungsmodul (7-17) die von der Bilderfassungsvorrichtung (5) erhaltenen Bilder verarbeitet, indem sie nur einen einzigen Wert eines kolorimetrischen Verarbeitungsmodells mit drei Werten berücksichtigt.

**3.** Nachweissystem (1) nach Anspruch 2, wobei das kolorimetrische Bildverarbeitungsmodul (7-17) ein kolorimetrisches Bildverarbeitungsmodul gemäß einem HSV-Modell (17) umfasst und die mittels der Bilderfassungsvorrichtung (5) erhaltenen Bilder nur verarbeitet, indem es den H-Wert des HSV-Modells berücksichtigt.

**4.** Nachweissystem (1) nach einem der vorhergehenden Ansprüche, wobei der Emissionsbereich (11) ein Bruchglas (2) umfasst, das auf einer reflektierenden Fläche (10) angeordnet ist, die von den beiden Arten von Lichtquellen gleichzeitig bestrahlt wird, deren Lichtstrahlen von der Bilderfassungsvorrichtung (5) erfasst werden, die auf derselben Seite der reflektierenden Fläche (10) wie die Lichtquellen angeordnet ist.

**5.** Nachweissystem (1) nach einem der vorhergehenden Ansprüche, wobei die Strahlung der Lichtquelle (4) vom Typ des monochromatischen Ultravioletts durch einen auf 365 nm zentrierten Bandpassfilter (15) gelangt.

**6.** Nachweissystem (1) nach einem der vorhergehenden Ansprüche, wobei die von der mindestens einen Quelle (3) für weißes Licht abgestrahlten Lichtwellen von einer gekreuzten Polarisator- (16) und Analysatorvorrichtung (18) verarbeitet werden, bevor sie von der Bilderfassungsvorrichtung (5) erfasst werden.

**7.** Nachweissystem (1) nach einem der vorhergehenden Ansprüche, das ein Fördermittel (8) aufweist, das dazu vorgesehen ist, das Bruchglas (2) auf der Höhe des Emissionsbereichs (11) der Lichtquellen durchlaufen zu lassen.

**8.** Nachweissystem (1) nach einem der vorhergehenden Ansprüche, das ein Berechnungsmodul aufweist, das so ausgebildet ist, dass es die Position der verschiedenen Fragmente des Bruchglases (2) während seiner Bewegung bestimmt.

**9.** Nachweissystem (1) nach einem der vorhergehenden Ansprüche, wobei die Bildverarbeitungsvorrichtung (6) weiterhin ein kolorimetrisches Bildverarbeitungsmodul (7) gemäß einem RGB-Modell umfasst.

**10.** Anlage zur Herstellung von Glasfasern, Hohlglas oder Flachglas, die zumindest einen Glasofen und Formstationen umfasst, wobei Bruchglas in den Glasofen eingeführt wird, um geschmolzenes Glas zu erhalten, das zur Versorgung der Formstationen vorgesehen ist, wobei die Anlage ein automatisiertes Nachweissystem nach einem der vorhergehenden Ansprüche umfasst, wobei das automatisierte Nachweissystem auf dem Weg des Bruchglases in Richtung des Glasofens angeordnet ist.

**11.** Verfahren zur Bereitstellung eines Systems (1) zum automatisierten Nachweis von Materialien vom Glaskeramiktyp in Bruchglas (2) mittels Kolorimetrie nach einem der Ansprüche 1 bis 9, **dadurch gekennzeichnet, dass** es die folgenden Schritte umfasst:

- einen Schritt der gleichzeitigen Beleuchtung eines Bruchglases (2) durch mindestens eine Quelle (3) für weißes Licht und mindestens eine Lichtquelle (4) vom Typ des monochromatischen Ultravioletts,
- einen Schritt der Erfassung von reflektierten Lichtstrahlen (14) durch eine Bilderfassungsvorrichtung (5),
- einen Schritt der kolorimetrischen Verarbeitung des mittels der Bilderfassungsvorrichtung (5) erhaltenen Bildes durch ein kolorimetrisches Bildverarbeitungsmodul (7-17), wodurch das Identifizieren der Glaskeramik unter den andern Glassorten ermöglicht wird.

12. Nachweisverfahren nach Anspruch 11, wobei die kolorimetrische Verarbeitung durch die Bestimmung eines einzelnen Wertes pro Pixel oder einer Gruppe von Pixeln im analysierten Bild und dann durch einen Vergleich mit einem Wertebereich erfolgt.

13. Nachweisverfahren nach Anspruch 11 oder 12, wobei es sich bei der kolorimetrischen Verarbeitung um eine kolorimetrische Verarbeitung gemäß einem HSV-Modell handelt und durch Grenzwerte um einen HSV-Wert eines H zwischen 50° und 70° mit S = 1 und V = 0,5 begrenzt ist.

14. Nachweisverfahren nach einem der Ansprüche 11 bis 13, wobei die mittels der Bilderfassungsvorrichtung (5) erhaltenen Darstellungen von Fragmenten des Bruchglases (2), die mittels der kolorimetrischen Verarbeitung gemäß einem HSV-Modell dahingehend identifiziert wurden, dass es sich um Glaskeramikfragmente handelt, nach einer zweiten kolorimetrischen Verarbeitung derselben Fragmentdarstellungen durch das kolorimetrische Bildverarbeitungsmodul (7) gemäß einem RGB-Modell durch eine Berechnung des Verhältnisses von blauer Farbe zu roter Farbe erneut überprüft werden.

15. Nachweisverfahren nach Anspruch 14, wobei die Fragmente des Bruchglases (2), die mittels der kolorimetrischen Verarbeitung gemäß einem HSV-Modell dahingehend identifiziert wurden, dass es sich um Glaskeramikfragmente handelt, dahingehend bestätigt werden, dass es sich um Glaskeramikfragmente handelt, wenn nach einer kolorimetrischen Verarbeitung gemäß einem RGB-Modell die Berechnung des Verhältnisses von blauer Farbe zu roter Farbe mehr als 0,5 ergibt.

## Claims

1. Automated system (1) for detecting materials of the glass-ceramic type among a cullet (2), **characterized in that** it comprises at least one white light source (3) and at least one monochromatic ultraviolet light source (4), each being oriented to emit in the same emission region (11), an image acquisition device (5) configured to acquire an image of said emission area (11) and an image processing device (6) configured to process each of the images acquired by the image acquisition device (5), the image processing device (6) comprising a colorimetric image processing module (7-17) configured to provide the detection of glass-ceramic materials among other types of glass.

2. Detection system (1) according to claim 1, wherein the colorimetric image processing module (7-17) processes the images obtained by the image acquisition device (5) by considering only one datum of a three-data colorimetric processing model.

3. Detection system (1) according to claim 2, wherein the colorimetric image processing module (7-17) comprises a colorimetric image processing module according to an HSV model (17) and processes the images obtained by the image acquisition device (5) only by considering the data H of the HSV model.

4. Detection system (1) according to one of the preceding claims, wherein the emission region (11) comprises a cullet (2) arranged on a reflective surface (10), illuminated by the two types of light sources simultaneously, the light rays of which are picked up by the image acquisition device (5) arranged on the same side of the reflective surface (10) as the light sources.

5. Detection system (1) according to one of the preceding claims, wherein the radiation from the monochromatic ultraviolet light source (4) passes through a band-pass filter (15) centered at 365 nm.

6. Detection system (1) according to one of the preceding claims, wherein the light waves emitted by at least the white light source (3) are processed by a crossed polarizer (16) and analyzer (18) device before being picked up by the image acquisition device (5).

7. Detection system (1) according to one of the preceding claims, wherein it comprises a conveyor (8) intended to make the cullet (2) pass through the emission region (11) of the light sources.

8. Detection system (1) according to one of the preceding claims, wherein it comprises a calculation module configured to determine the position of the various fragments of the cullet (2) during its movement.

9. Detection system (1) according to one of the preceding claims, wherein the colorimetric processing device (6) further comprises a colorimetric image processing module according to an RGB model (7).

10. Facility for manufacturing glass fibers, hollow glass or flat glass comprising at least one glass furnace and forming stations, in which cullet is poured into the glass furnace to obtain molten glass intended to supply the forming stations, said facility comprising a system for automated detection according to one of the preceding claims, said automated detected system being positioned on the path of the cullet toward the glass furnace.

11. Method for implementing an automated system (1) for colorimetrically detecting materials of the glass-ceramic type among a cullet (2) according to one of claims 1 to 9, **characterized in that** it comprises the following steps:

- a step of simultaneous lighting by at least one source of white light (3) and at least one monochromatic ultraviolet light source (4) of a cullet (2),
- a step of acquiring light rays (14) reflected by an image acquisition device (5),
- a step of colorimetric processing by a colorimetric image processing module (7-17) of the image obtained by the image acquisition device (5) making it possible to identify the glass-ceramic material among other types of glass.

12. Detection method according to claim 11, wherein the colorimetric processing is carried out by determining a single datum per pixel or group of pixels of the analyzed image, then by comparison with a range of data.

13. Detection method according to claim 11 or 12, wherein the colorimetric processing is colorimetric processing according to an HSV model and is thresholded around an HSV datum of H of between 50° and 70° with S=1 and V=0.5.

14. Detection method according to one of claims 11 to 13, wherein the representations obtained by the image acquisition device (5) of the fragments of cullet (2) identified as being fragments of glass-ceramic material by the colorimetric processing according to an HSV model are rechecked by calculating the ratio of blue color to red color after a second colorimetric processing by the colorimetric image processing module according to an RGB model (7) of these same fragment representations.

15. Detection method according to claim 14, wherein the fragments of cullet (2) identified as being fragments of glass-ceramic material by the colorimetric processing according to an HSV model are confirmed as being fragments of glass-ceramic material if the calculation of the ratio of blue color to red color is greater than 0.5 after colorimetric processing according to an RGB model.

**FIG. 1**

FIG. 2

FIG. 3

34

32

35

33

28

$$\frac{B}{R} > 0{,}5$$

$50° \leq H \leq 70°$

27

29

31

30

FIG. 4

**EP 3 956 652 B1**

## RÉFÉRENCES CITÉES DANS LA DESCRIPTION

**Documents brevets cités dans la description**

- WO 2018096943 A